# EUROPÄISCHE PATENTANMELDUNG

(11) **EP 0 899 009 A2**
(43) Veröffentlichungstag der Anmeldung: **03.03.1999**
(21) Anmeldenummer: 98116053.4
(22) Anmeldetag: 26.08.1998
(51) Int. Cl.: B01J 19/00, B01F 5/06

(54) **Verfahren zur Herstellung von Feststoffen durch Fällung**

(30) Priorität: 01.09.1997 DE 19738085
(71) Anmelder: BASF AKTIENGESELLSCHAFT, 67056 Ludwigshafen (DE)
(72) Erfinder: Horn, Hans Christoph, Dr., 67245 Lambsheim (DE); Kumberger, Otto, Dr., 68163 Mannheim (DE); Milies, Marco, Dr., 67061 Ludwigshafen (DE); Neth, Norbert, Dr., 67240 Bobenheim-Roxheim (DE); Pöpel, Wolfgang Jürgen, Dr., 64297 Darmstadt (DE); Rieker, Christopher William, Dr., 67454 Hassloch (DE); Sprague, Michael Jolyon, Dr., 68161 Mannheim (DE); Stroezel, Manfred, 68549 Ilvesheim (DE)

(57) **Zusammenfassung**

Verfahren zur Herstellung von Feststoffen durch Fällung in einem Mischer unter Bildung eines Gemisches aus Feststoff und Flüssigkeit, wobei man die Einsatzstoffe einer Mischvorrichtung zuführt, welche im wesentlichen eine rotationssymmetrische Mischkammer mit darin angeordnetem Rotor aufweist, die aus einer Umfangswand und zwei Stirnwänden gebildet wird und wobei man
a) die Einsatzstoffe mindestens je einer Einlaßöffnung in der Umfangswand der Mischkammer zuführt und
b) das gebildete feststoffhaltige Gemisch mindestens einer Auslaßöffnung in der Umfangswand in der Mischkammer entnimmt.

## Beschreibung

Die vorliegende Erfindung betrifft ein verbessertes Verfahren zur Herstellung von Feststoffen durch Fällung in einem Mischer unter Bildung eines Gemisches aus Feststoff und Flüssigkeit.

Es sind unterschiedliche Vorrichtungen und Verfahren zur Herstellung von Feststoffen durch Fällung bekannt. Häufig werden solche Reaktionen in Rührkesseln durchgeführt. Solche Prozesse sind beispielsweise in O. Söhnel, J. Garside: Precipitation; Butterworth Heinemann, Oxford 1992 umfangreich beschrieben. Neben dem aufwendigen und kostenintensiven Aufwand, der bei solchen Verfahren zu betreiben ist, erweisen sich auch die relativ hohen Verweilzeiten als nachteilig. Ferner bestehen bei solchen Verfahren lediglich unzureichende Kontrollmöglichkeiten.

In der EP-B 0 655 984 wird ein Verfahren zur Erzeugung von Feststoffen durch Mischen von zwei Flüssigkeiten beschrieben, wobei diese Flüssigkeiten bei hohem Druck gemeinsam einer Entspannungsvorrichtung zugeführt werden.

Durch die Entspannung in verschieden gestalteten Mischkammern wird die über den Druck eingebrachte Leistung dissipiert und zum Mischen verwendet. Hierbei treten aber hohe lokale Temperaturspitzen auf, die zu einer Schädigung des Produktes oder der Bildung ungewollter Phasen führen können. Weiterhin kann es bei diesen aufwendigen Hochdruckverfahren zu Kavitationserscheinungen kommen, die eine weitere Produktschädigung bewirken.

Es stellte sich somit die Aufgabe, ein verbessertes Verfahren zur Herstellung von Feststoffen durch Fällung in einem Mischer unter Bildung eines Gemisches aus Feststoff und Flüssigkeit zu finden, welches den genannten Nachteilen abhilft und das eine verfahrenstechnisch einfache und wirtschaftliche Herstellung von Feststoffen hoher Qualität ermöglicht. Weiterhin soll das neue Verfahren bezüglich der wesentlichen Verfahrensparameter gut kontrollierbar und im Falle von Schwankungen, wie sie sich beispielsweise bei Wechsel der Einsatzstoffe ergeben können, leicht und schnell regelbar sein.

Demgemäß wurde ein Verfahren zur Herstellung von Feststoffen durch Fällung in einem Mischer unter Bildung eines Gemisches aus Feststoff und Flüssigkeit gefunden, welches dadurch gekennzeichnet ist, daß man die Einsatzstoffe einer Mischvorrichtung zuführt, welche im wesentlichen eine rotationssymmetrische Mischkammer mit darin angeordnetem Rotor aufweist, die aus einer Umfangswand und zwei Stirnwänden gebildet wird und wobei man
a) die Einsatzstoffe mindestens je einer Einlaßöffnung in der Umfangswand der Mischkammer zuführt und
b) das gebildete feststoffhaltige Gemisch mindestens einer Auslaßöffnung in der Umfangswand in der Mischkammer entnimmt.

Der Aufbau von für das erfindungsgemäße Verfahren geeigneten Mischvorrichtungen wird in DE-C 4 220 239 beschrieben. Diese Vorrichtungen vereinigen in sich die Eigenschaften einer Pumpe, eines Mischers sowie eines Reaktors. Im wesentlichen besteht eine solche Vorrichtung aus einem mehrteiligen Gehäuse, in dem eine rotationssymmetrische Mischkammer ausgebildet ist. Dabei wird die Mischkammer durch ein zylindrisches Einsatzelement mit einer Stirnwand und einer Umfangswand sowie einen eine Stirnwand aufweisenden Lagerträger begrenzt. In der Umfangswand bzw. in dem entsprechenden Gehäuseteil sind Einlaßöffnungen für die zu mischenden Komponenten und eine Auslaßöffnung für das Komponentengemisch vorgesehen. Das rotierende Teil besteht bevorzugt aus einer Scheibe mit Einkerbungen. Die Zuführung der Lösungen kann dabei am selben Umfangswinkel oder an verschiedenen Winkelpositionen des Mischers erfolgen. Bisher wurden solche Vorrichtungen lediglich zur Vermischung und/oder Reaktion von flüssigen Einsatzstoffen eingesetzt, wobei es gegebenenfalls zu einer Gasentwicklung bei der Reaktion kommen konnte. Die Verwendung von solchen Vorrichtungen in Prozessen, bei welchen eine relativ starke Feststoffbildung zu erwarten ist, hätte der Fachmann nicht in Erwägung gezogen, da in diesem Fall ein Verstopfen der Mischvorrichtung zu befürchten war. Überraschenderweise können diese Vorrichtungen jedoch auch bei Reaktionen zur Erzeugung von Feststoffen eingesetzt werden. Bevorzugt kann das Verfahren auch bei Prozessen eingesetzt werden, bei welchen bereits die Einsatzstoffe einen gewissen Feststoffgehalt aufweisen. Die Feststoffanteile der Einsatzstoffströme liegen hierbei üblicherweise bei etwa 0,01 bis 20, bevorzugt 1 bis 7 Gew.%.

Das erfindungsgemäße Verfahren bietet eine verläßliche Kontrolle und Regelbarkeit von für die Fällreaktion wichtigen verfahrenstechnischen Parametern wie Temperatur und pH-Wert und ermöglicht so die Herstellung von Feststoffen mit definierter Porengröße und Partikelgröße. Auch die Phase, d.h. die Struktur des hergestellten Feststoffes kann durch das erfindungsgemäße Verfahren beeinflußt werden.

Das Verfahren ermöglicht kurze Misch- und Verweilzeiten, sie liegen üblicherweise bei etwa 1 ms bis 2 s, bevorzugt 5 ms bis 10 ms. Es können unterschiedliche Feststoffe hergestellt werden, generell eignet es sich bei Hydroxiden, Carbonaten, Hydroxycarbonaten, Oxiden und Mischoxiden von einem oder mehreren Elementen, Zeolithen und anderen schwerlöslichen Materialien, besonders bevorzugt bei Carbonaten, Hydroxycarbonaten und Hydroxiden wie sie als Precursoren von Katalysatoren und Katalysatorträgern Einsatz finden. Die Drücke bei dem erfindungsgemäßen Verfahren liegen bei etwa 1 bis 10 bar, bevorzugt 1 bis 1,5 bar.

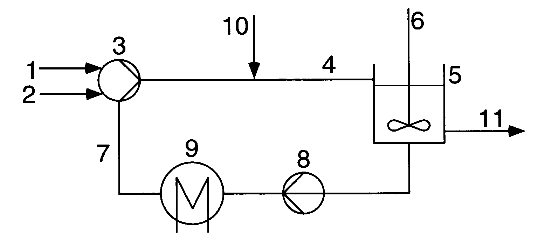

Das erfindungsgemäße Verfahren wird im folgenden anhand der Figur in einer bevorzugten Ausführungsform näher beschrieben.

Über die Leitungen (1) und (2) werden die Einsatzstoffe der Mischvorrichtung (3) zugeführt. Bei dieser Mischvorrichtung handelt es sich um eine Peripheralpumpe mit einem Mischvolumen von 3,85 ml und einer Drehzahl von 2900 U/min.

Die Einsatzstoffe werden so zugeführt, daß die Maische zentral auf das Laufrad gelegt, Soda und Metallsalzlösung dagegen seitlich zugegeben werden.

In der Mischvorrichtung kommt es zur Fällungsreaktion. Das so gewonnene Gemisch wird über Leitung (4) einem mit einem Rührer (6) versehenen Entgasungsbehälter (5) zugeführt. Die Verweilzeit in dem Entgasungsbehälter liegt bei etwa 1 bis 100 s, die Rührerdrehzahl liegt bei etwa 50 bis 500 U/min. Je nach eingesetztem Stoffsystem entstehen wesentliche Mengen an Gas, und es empfiehlt sich, dieses Gas vor der Rückführung eines Teilstroms abzutrennen, um eine Beeinträchtigung des Kreislaufs zu vermeiden. Insbesondere für Fällungen mit Carbonaten kann der Volumenanteil von gasförmigen CO₂ bis zu 90 % betragen, wobei der Systemdruck so eingestellt werden kann, daß die gewünschte Konzentration an gelöstem CO₂ erzielt wird.

Über Leitung (7) und Pumpe (8) wird ein Teilstrom des so erhaltenen Produkts vorteilhafterweise zurück in die Mischvorrichtung (3) geführt. Der Anteil des rückgeführten Stromes sollte etwa 50 bis 98 %, bevorzugt 94 bis 96 % bezogen auf den gesamten Volumenstrom durch den Mischer betragen. Durch die Rückführung wird vorteilhafterweise eine Abscheidung von Feststoff in der Mischvorrichtung besonders gut vermieden. Die Übersättigung kann hierdurch gezielt eingestellt werden. Mittels eines Wärmetauschers (9), der bevorzugt in der Rückführungsleitung (7) angeordnet ist, kann die Temperatur im Mischer auf den gewünschten Wert eingestellt werden. Allgemein liegen die Temperaturen im Mischer bei etwa 25 bis 70°C. Der Rest des Produkts wird über Leitung (11) abgezogen. Zur Entgasung kann sich auch ein Verdünnen des gewonnenen Produkts empfehlen. Hierdurch wird beispielsweise im Fall von Suspensionen die Koaleszenz wesentlich beschleunigt und das Gas trennt sich anschließend leicht von der Suspension.

Über Leitung (10) können andere Einsatzstoffe wie beispielsweise Wasser zugegeben werden. Dies kann sich beispielsweise empfehlen, um die Keimbildung zu unterdrücken und so definiert größere Partikel zu erhalten.

Der pH-Wert kann beispielsweise eingestellt werden, indem man Salpetersäure oder Soda zudosiert.

Das erfindungsgemäße Verfahren bietet eine einfache und wirtschaftliche Herstellung von Feststoffen durch Fällung. Aufgrund der guten Regelbarkeit wichtiger Verfahrensparameter wie Temperatur und pH-Wert kann man vorteilhafterweise ein Produkt hoher Qualität mit definierter Porengröße, Partikelgröße und gegebenenfalls auch Phase (Struktur) herstellen.

### Beispiel

Es wurden Versuche zur Fällungen von Metallionen durch Sodalösungen durchgeführt. Dazu wurde ein Mischer der Firma K Engineering, 58566 Kierspe, Deutschland mit einem Kammervolumen von 3,85 ml bei einer Drehzahl von 2900 U/min betrieben. Die Volumenströme an Metallsalzlösung, Sodalösung und rückgeführter Suspension sind in der folgenden Tabelle aufgeführt. Ein weiter Parameterbereich wurde abgedeckt. Stabile Fällbedingungen konnten im angegebenen Parameterbereich erreicht werden. Der rückgeführte Volumenstrom, die Metallsalzlösung und die Sodalösung wurden getrennt, aber am selben Umfangswinkel dem Mischer zugeleitet. Der Austritt des Mischers war um 270° in Drehrichtung gegenüber dem Eintritt versetzt. Der rückgeführte Volumenstrom betrug das 12 bis 46-fache der Summe der Volumenströme von Metallsalz-, Sodalösung und Spülung.

**Tabelle**

| **Fällungen im Mischer - Daten zu Fällungsprodukten** | | |
|---|---|---|
| MSL + Soda + Spülung l/h | Kreislauf l/h | Verhältnis Kreislauf/ (MSL + Soda + Spülung) l/l |
| 3 | 35 | 12 |
| 5,07 | 70 | 14 |
| 3,5 | 70 | 20 |
| 3,39 | 70 | 21 |
| 2,76 | 70 | 25 |
| 1,77 | 70 | 40 |
| 3,26 | 150 | 46 |

## Patentansprüche

1. Verfahren zur Herstellung von Feststoffen durch Fällung in einem Mischer unter Bildung eines Gemisches aus Feststoff und Flüssigkeit, dadurch gekennzeichnet, daß man die Einsatzstoffe einer Mischvorrichtung zuführt, welche im wesentlichen eine rotationssymmetrische Mischkammer mit darin angeordnetem Rotor aufweist, die aus einer Umfangswand und zwei Stirnwänden gebildet wird und wobei man
a) die Einsatzstoffe mindestens je einer Einlaßöffnung in der Umfangswand der Mischkammer zuführt und
b) das gebildete feststoffhaltige Gemisch mindestens einer Auslaßöffnung in der Umfangswand in der Mischkammer entnimmt.

2. Verfahren nach Anspruch 1, dadurch gekennzeichnet, daß man einen Teil des gebildeten feststoffhaltigen Gemisches in die Mischvorrichtung zurückführt.

3. Verfahren nach Anspruch 2, dadurch gekennzeichnet, daß man das gebildete feststoffhaltige Gemisch vor Rückführung eines Teilstromes entgast.
